(19) Europäisches Patentamt
European Patent Office
Office européen des brevets

(11) Publication number: **0 206 795**
**B1**

(12) **EUROPEAN PATENT SPECIFICATION**

(45) Date of publication of patent specification: **14.11.90**

(51) Int. Cl.$^5$: **C 01 B 21/068**, C 04 B 35/58

(21) Application number: **86304810.4**

(22) Date of filing: **23.06.86**

(54) **Method of producing silicon nitride powders.**

(30) Priority: **24.06.85 JP 135876/85**
**25.09.85 JP 209897/85**
**27.09.85 JP 212632/85**
**31.10.85 JP 242728/85**
**28.12.85 JP 293470/85**

(43) Date of publication of application:
**30.12.86 Bulletin 86/52**

(45) Publication of the grant of the patent:
**14.11.90 Bulletin 90/46**

(84) Designated Contracting States:
**DE FR GB SE**

(56) References cited:
**PATENT ABSTRACTS OF JAPAN, vol. 8, no. 138 (C-231)1575r, 27th June 1984; & JP-A-59 50 006 (TOKYO SHIBAURA DENKI K.K.) 22-03-1984 (Cat. D,A)**

**The file contains technical information submitted after the application was filed and not included in this specification**

(73) Proprietor: **KAWASAKI STEEL CORPORATION**
**No. 1-28, 1-Chome Kitahonmachi-Dori**
**Chuo-Ku, Kobe-Shi Hyogo 651 (JP)**

(72) Inventor: **Uenosono, Satoshi Technical Research Division**
**Kawasaki Steel Corporation 1, Kawasaki-Cho**
**Chiba City Chiba Pref. (JP)**
Inventor: **Funahashi, Toshihiko Technical Research Division**
**Kawasaki Steel Corporation 1, Kawasaki-Cho**
**Chiba City Chiba Pref. (JP)**
Inventor: **Uchimura, Ryoji Technical Research Division**
**Kawasaki Steel Corporation 1, Kawasaki-Cho**
**Chiba City Chiba Pref. (JP)**
Inventor: **Oguchi, Yukio Technical Research Division**
**Kawasaki Steel Corporation 1, Kawasaki-Cho**
**Chiba City Chiba Pref. (JP)**

(74) Representative: **Kosmin, Gerald Emmanuel et al**
**HASELTINE, LAKE & CO. Hazlitt House 28**
**Southampton Buildings Chancery Lane**
**London, WC2A 1AT (GB)**

**EP 0 206 795 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(56) References cited:
CHEMICAL ABSTRACTS, vol. 100, no. 22, May 1984, page 269, abstract no. 179232k, Columbus, Ohio, US; & JP-A-59 13 611 (HORI, FUMIO) 24-01-1984 (Cat. D,A)

**Description**

This invention relates to a method of producing silicon nitride powder, and more particularly to a method of producing high purity silicon nitride powders having a high content of α-type silicon nitride (hereinafter referred to as α-$Si_3N_4$) and a fine and uniform particle size.

Although there are α-type and β-type silicon nitrides, since sintered bodies using α-$Si_3N_4$ as a starting material are excellent in the high-temperature strength and heat resistance, the use of α-$Si_3N_4$ powder is largely expected as a starting material for structural ceramics used at high temperatures. When so-called $Si_3N_4$ ceramics are used as a structural material, the sintering properties of such ceramics are strongly dependent upon the purity, particle size and so on of the starting powder. Therefore, it is important to produce high quality α-$Si_3N_4$ powders having a slight impurity content and a fine and uniform particle size.

As a method of producing such silicon nitride powders (synthetic method), there are known the following four methods (1)—(4):

(1) Nitridation method of heating metallic silicon in $N_2$ according to the following equation of reaction in a nitrogen atmosphere for a long time:

$$3Si + 2N_2 \rightarrow Si_3N_4;$$

(2) Chemical vapor deposition method of reacting silicon tetrachloride or silane with ammonia according to the following equation of reaction:

$$3SiCl_4 + NH_3 \rightarrow Si_3N_4 + 12HCl;$$

(3) Method of reducing $SiO_2$ in $N_2$ with an approximately stoichiometric amount of carbon and reacting the resulting SiO according to the following equation of reaction:

$$3SiO_2 + 6C + 2N_2 \rightarrow Si_3N_4 + 6CO;$$

and

(4) A so-called imide decomposition method, wherein a solution of $SiCl_4$ in an organic solvent is reacted with a liquefied ammonia to form a silicon diimide ($Si(NH)_2$) and then the latter is heat treated to form $Si_3N_4$ according to the following equation of reaction:

$$SiCl_4 + 6NH_3 \rightarrow Si(NH)_2 + 4NH_4Cl,$$

$$3Si(NH)_2 \rightarrow Si_3N_4 + 2NH_3.$$

In the method (1) among the above methods, the nitridation of Si in $N_2$ is exothermic, so that it is required to take a fair means in the process for the control of heat generation. For instance, Si powder is necessary to be selected from relatively coarse grains, and the pulverizing must be performed after the nitridation. In this case, there is caused a problem that the contamination can not be avoided.

The method (2) is suitable for covering a surface of a semiconductor element, but is unsuitable as an industrially mass production method of producing starting powders for engineering ceramic materials.

In the method (3), it is necessary to use sufficiently purified silicon dioxide powder and carbon powder as starting materials. On the other hand, the resulting product is apt to form a mixture of α-$Si_3N_4$, β-$Si_3N_4$, silicon oxynitride ($Si_2ON_2$) and SiC. Therefore, this method has a disadvantage that the yield of α-$Si_3N_4$ is low.

The imide decomposition method (4) can provide high purity $Si_3N_4$ powder, but can not be said to be essentially an economical method owing to the use of expensive $SiCl_4$.

As a countermeasure for overcoming the problems of the above well-known methods, there are known some techniques as disclosed in Japanese Patent laid open Nos. 53—102,300, 59—13,611 and 59—50,006. However, these techniques have also the following problems to be solved.

That is, Japanese Patent laid open No. 53—102,300 discloses a method wherein an excessive amount of C is used together with a given amount of $Si_3N_4$ powder. However, the mean particle size of the resulting $Si_3N_4$ powder is within a range of 1—1.7 µm, which is very unsuitable for the production of fine silicon nitride powder effective for improving the sintering properties of the sintered body.

In Japanese Patent laid open No. 59—13,611 is disclosed a method wherein a so-called amorphous SiO is heat treated in a reduction nitriding atmosphere to form ultrafine $Si_3N_4$ powder. Even if the heat treatment is merely performed in the reduction nitriding atmosphere, however, the nitridation is actually incomplete, so that the resulting $Si_3N_4$ powder contains $Si_2ON_2$ and the like as an impurity and hence the high quality $Si_3N_4$ powder cannot be obtained in a higher yield.

Moreover, Japanese Patent Application Publication No. 59—50,006 discloses a method wherein a mixture of SiO powder, C powder and Si powder is heated under atmospheric pressure at 1350 to 1480°C in a nitrogen-containing atmosphere to perform the reduction nitriding. In this case, however, the resulting α-type $Si_3N_4$ powder contains coarse $Si_3N_4$ produced by direct nitriding of Si powder due to the use of Si

powder having a mean particle size of not more than 10 µm. To remove the residual carbon from the α-type $Si_3N_4$, it is necessary to heat the product in an oxidising atmosphere at 600—700°C under atmospheric pressure.

It is, therefore, an object of the invention to solve the aforementioned problems of the conventional techniques.

In accordance with the invention it has been found that high quality silicon nitride powder having a high concentration of fine α-$Si_3N_4$ powder and containing no SiC and $Si_2ON_2$ can be obtained in a high yield by mixing silicon monoxide (SiO) powder with a carbonaceous material and, if necessary, Si powder and/or $Si_3N_4$ powder, and then firing the resulting mixture at a temperature of 1400 to 1800°C in a nitriding atmosphere such as a mixed gas of $N_2$ and inert gas, having a partial nitrogen pressure of not less than 2 atmospheric pressures.

The mixture should have a molar ratio of C/SiO of 0.7—2.0 and be shaped into a moulded body having a bulk density of not more than 0.85 g/cm$^3$ prior to the firing, so as to increase efficiency when the $Si_3N_4$ powder is obtained in mass production. In a preferred embodiment of the invention, the mixture further contains Si powder and/or $Si_3N_4$ powder.

The invention will now be described by way of example, with reference to the accompanying drawing which is a diagram illustrating an equilibrium between $Si_3N_4$ and SiC with respect to temperature and partial nitrogen pressure.

The invention will be described in detail below.

As SiO powder to be used in the invention, mention may be made of SiO powder used as a starting material for the formation of deposited films in an electronics field, amorphous SiO ultrafine powder having a particle size of not more than 1 µm and the like. In order to obtain $Si_3N_4$ fine powder, it is desirable that SiO powder as the starting material is made finer.

Such SiO powders are obtained as a high-temperature reaction product in a reaction system such as $SiO_2$—C system, $SiO_2$—Si system or the like. In this case, when SiO vapor produced at the high temperature is quenched to deposit without causing disproportionation ($2SiO \rightarrow Si + SiO_2$), the resulting SiO powder is confirmed to be amorphous by an X-ray diffractometry. Further, since the SiO powder is obtained through the vapor phase, it is very fine and the surface thereof is rich in the activity. In some cases, therefore, the surface of the SiO powder may be oxidized or nitrided by reacting with oxygen or nitrogen in air.

According to the invention, SiO ultrafine powder (<0.1 µm) obtained by condensation of SiO vapor by-produced in the production of zirconia from zircon powder and carbon material may also be used as SiO powder.

The reason on the use of SiO powder in the invention is as follows.

SiO vapor produced by a silica reduction process of the following reaction formula (1) is reacted as an intermediate with C in $N_2$ atmosphere according to the following reaction formula (2) to obtain $Si_3N_4$:

$$SiO_2 + C \rightarrow SiO + CO \quad (1)$$

$$3SiO + 2N_2 + 3C \rightarrow Si_3N_4 + 3CO \quad (2)$$

In the above reactions, i.e. carbothermic reduction of $SiO_2$ in $N_2$, $SiO_2$ is poor in the reaction activity as compared with SiO powder and softens in the course of the heating, which obstructs not only the flowing of SiO vapor obtained by the reaction formula (1) but also the flowing of atmosphere gas (particularly $N_2$ gas) and the dispersing of CO (gas) generated to reduce partial pressures of SiO and $N_2$ in the starting materials and lower the yield of $Si_3N_4$. Furthermore, β-SiC, $Si_2ON_2$ and the like are apt to be inevitably produced. On the contrary, when C powder is added to SiO powder in an amount corresponding to the approximately stoichiometric amount of the reaction formula (2), preferably an amount slightly larger than the stoichiometric amount, the partial pressure of $O_2$ in the reaction vessel can sufficiently be reduced to control the amount of $SiO_2$ produced according to the following reaction formula (3):

$$SiO + \tfrac{1}{2}O_2 \rightarrow SiO_2 \quad (3)$$

Therefore, SiO powder easily changes into SiO vapor to promote the reaction formula (2).

According to the invention, the carbonaceous material is not particularly restricted, but it is desirable that the uniform mixed state with SiO powder is attained and the amount of impurities is less. For example, petroleum coke and pitch having a less ash content, coal pitch, carbon black, various organic resins and the like are suitable as the carbonaceous material.

In the mixture of SiO powder and carbonaceous material according to the invention, a molar ratio of C/SiO is within a range of 0.7—2.0, preferably 1.0—1.5 for increasing the yield of α-$Si_3N_4$ powder. When the molar ratio of C/SiO is less than 0.7, a large amount of $Si_2ON_2$ is produced with the production of $SiO_2$ to decrease the amount of α-$Si_3N_4$ powder produced. While, when the molar ratio exceeds 2.0, the formation of SiC is recognized and the amount of β-$Si_3N_4$ produced increases, and finally the yield of α-$Si_3N_4$ reduces.

According to the invention, as the molar ratio of C/SiO in the mixture approaches to the upper limit, carbon may remain in the product after the firing. In this case, the remaining carbon can be removed by further firing in an oxidizing atmosphere. The firing temperature in the oxidizing atmosphere is not higher

than 900°C, preferably not higher than 600°C for preventing the oxidation of the resulting silicon nitride powder.

In order to further increase the yield of α-$Si_3N_4$, according to the invention, the mixture of SiO powder and C powder may contain $Si_3N_4$ powder and/or Si powder.

At first, $Si_3N_4$ powder is desirable to have a high purity and be uniform. Further, in order to increase the ratio of α-$Si_3N_4$ in the product, it is favorable that α-type $Si_3N_4$ powder is mainly added to the mixture.

When α-$Si_3N_4$ powder is added to the mixture of SiO powder and C powder, the addition amount is preferably 100 parts by weight based on 100 parts by weight of the mixture at maximum. When the addition amount exceeds 100 parts by weight, the addition effect is saturated and the economical merit is lost.

Then, when Si powder is added to the mixture of SiO powder and C powder, the addition amount is preferably 20 parts by weight based on 100 parts by weight of the mixture at maximum. When the addition amount exceeds 20 parts by weight, the addition effect is saturated and the economical merit is lost.

The Si powder to be used has a mean particle size of not more than 1 μm, preferably not more than 0.5 μm. When the particle size is too large, the direct nitriding of Si into $Si_3N_4$ is incomplete, and the particle size of $Si_3N_4$ produced by the direct nitriding becomes large, and consequently coarse $Si_3N_4$ powder is incorporated into the desired $Si_3N_4$ powder to make the mean particle size thereof large.

According to the invention, the aforementioned powdery mixture is subjected to a subsequent firing step, after being previously shaped into a moulded body having a bulk density of not more than 0.85 $g/cm^3$, preferably 0.3—0.65 $g/cm^3$ prior to the firing. The formation of the molded body is industrially suitable because $Si_3N_4$ fine powder can easily be obtained in mass production. The reason why the bulk density of the molded body is limited to not more than 0.85 $g/cm^3$ is due to the fact that when the bulk density exceeds 0.85 $g/cm^3$, the partial pressure of $N_2$ inside the molded body is not sufficiently raised in the nitriding reaction of SiO to $Si_3N_4$ according to the formula (2) and consequently $Si_2ON_2$, SiC and the like are coexistent in the resulting product.

When the bulk density of the molded body made from SiO—C powdery mixture is not more than 0.85 $g/cm^3$, this molded body is porous, and pores are existent even in the interior of the molded body. As a result, when this molded body is fired in the nitriding atmosphere, CO gas produced is easily dispersed from the pores to the outside of the reaction system, while $N_2$ gas invates into the pores to promote the nitriding reaction. That is, $N_2$ gas is continuously supplied to the pores without raising the partial pressure of CO, so that the reaction of the formula (2) is easily promoted to reduce and nitride SiO in the molded body. Further, since the reaction of the formula (2) occurs in such micropores at vapor phase, the rising of supersaturation degree can be expected to obtain $Si_3N_4$ fine powder as compared with the case of using the powdery mixture. On the other hand, when the bulk density exceeds 0.85 $g/cm^3$, the gas exchange between CO and $N_2$ in the pores of the molded body is not smoothly performed, so that the rising of CO partial pressure and the reduction of $N_2$ partial pressure are caused in the molded body, and consequently the promotion of reaction formula (2) is difficult and the formation of $Si_2ON_2$, SiC and the like is caused.

As a means for mixing the starting powders to form a powdery mixture, mention may be made of wet-type and dry-type ball mills.

According to the invention, the granulation of the powdery mixture into a molded body may be performed by granulating the powders with water, alcohol, acetone or the like and then drying them, or by granulating the powders with an organic binder such as polyvinyl alcohol resin and the like or an inorganic binder such as colloidal silica, silane coupling agent or the like and then drying them. As a means for such a granulation, use may be made of an extrusion molding machine, a briquette machine, a molding machine and so on.

According to the invention, the moulded body is fired at a temperature of 1,400—1,800°C in a nitriding atmosphere having a partial nitrogen atmosphere of not less than 2 atmospheric pressures.

The reason why the firing temperature is limited to a range of 1,400—1,800°C is based on the fact that when the firing temperature is less than 1,400°C, the formation of $Si_3N_4$ is difficult and the formation of $Si_2ON_2$ and $SiO_2$ is easy, while when it exceeds 1,800°C, the formation of β-$Si_3N_4$ increases to reduce the yield of the desired α-$Si_3N_4$ powder and the formation of SiC is observed in case of using a large amount of C.

As the nitriding gas, use may be made of any gas atmosphere capable of generating $N_2$ through thermal decomposition, such as $N_2$ gas, $N_2 + H_2$ gas, $N_2$ + Ar gas, $NH_3$ gas and so on.

According to the invention, the partial nitrogen pressure in the nitriding atmosphere is held at not less than 2 atmospheric pressures, preferably 3—10 atmospheric pressures. When the $N_2$ partial pressure is less than 2 atmospheric pressures, the amount of SiC produced becomes larger, the tendency of which is particularly conspicuous at a lower firing temperature, and consequently the yield of $Si_3N_4$ decreases. The effect of such an $N_2$ partial pressure is considered as follows.

That is, the following reaction formula (4) is considered to be led from the reaction equilibrium between SiC and $Si_3N_4$ in $N_2$ atmosphere:

$$3SiC + 2N_2 \rightarrow Si_3N_4 + 3C \qquad (4)$$

The results as shown in the single figure are obtained from the above reaction formula by regulating the

stable regions of SiC and $Si_3N_4$ through temperature and $N_2$ partial pressure. It is apparent from the single figure that $Si_3N_4$ is stable as the $N_2$ partial pressure becomes higher. Particularly, it is obvious that when the $N_2$ partial pressure is held above 2 atmospheric pressures in the above stable region, $Si_3N_4$ is more advantageously produced.

The following examples are given in illustration of the invention and are not intended as limitations thereof.

Examples 1—14 (Comparative), Comparative Examples 1—4

SiO powder having a mean particle size of 0.2 µm was uniformly mixed with carbon black (made by Tokai Carbon K.K., trade name of Seast V) at a mixing ratio or molar ratio (C/SiO) shown in the following Table 1. The resulting powdery mixture was lightly filled in a crucible and then fired at a temperature of 1,200—2,000°C in $N_2$ atmosphere having $N_2$ partial pressure of 0.5—10 atmospheric pressures for 2 hours. The crystal phase, yield of $Si_3N_4$ and ratio of α-formation (α-$Si_3N_4$) in the resulting product were measured by a powdery X-ray diffractometry, and also the particle size of silicon nitride powder was measured by a micro track method to obtain results shown in Table 1.

Then, the product of Example 6 was subjected to an oxidation treatment by heating in air at 500—900°C for 2 hours. The contents (wt%) of C and O as an impurity were measured before and after the oxidation treatment to obtain results as shown in the following Table 2.

Table 1(a)

| No. | C/SiO molar ratio in powdery mixture | $N_2$ partial pressure (atm) | Temperature (°C) | Crystal phase in product | Yield of $Si_3N_4$ (%) | Ratio of α-formation (%) | Particle size (μm) |
|---|---|---|---|---|---|---|---|
| Example 1 | 1.5 | 2 | 1,400 | $Si_3N_4$ | 94 | 90 | 0.9 |
| " 2 | 1.5 | 2 | 1,600 | $Si_3N_4$ | 94 | 87 | 1.1 |
| " 3 | 1.5 | 4 | 1,800 | $Si_3N_4$ | 93 | 85 | 1.1 |
| " 4 | 0.7 | 4 | 1,500 | $Si_3N_4$, $Si_2ON_2$ | 92 | 90 | 0.9 |
| " 5 | 1.0 | 6 | 1,500 | $Si_3N_4$, $Si_2ON_2$ | 94 | 88 | 0.8 |
| " 6 | 1.3 | 6 | 1,500 | $Si_3N_4$ | 93 | 88 | 1.0 |
| " 7 | 1.8 | 6 | 1,500 | $Si_3N_4$ | 93 | 85 | 0.9 |
| " 8 | 2.0 | 5 | 1,500 | $Si_3N_4$, SiC | 92 | 85 | 1.0 |
| " 9 | 1.5 | 2 | 1,600 | $Si_3N_4$ | 93 | 88 | 1.2 |
| " 10 | 1.5 | 5 | 1,600 | $Si_3N_4$ | 97 | 87 | 1.0 |
| " 11 | 1.5 | 10 | 1,600 | $Si_3N_4$ | 96 | 88 | 1.2 |
| " 12 | 1.5 | 5 | 1,600 | $Si_3N_4$ | 91 | 88 | 1.2 |
| " 13 | 1.5 | 5 | 1,600 | $Si_3N_4$ | 91 | 90 | 1.0 |
| " 14 | 1.5 | 5 | 1,600 | $Si_3N_4$ | 95 | 95 | 1.1 |

Table 1(b)

| No. | C/SiO molar ratio in powdery mixture | $N_2$ partial pressure (atm) | Temperature (°C) | Crystal phase in product | Yield of $Si_3N_4$ (%) | Ratio of α-formation (%) | Particle size (μm) |
|---|---|---|---|---|---|---|---|
| Comparative Example 1 | 1.5 | 0.3 | 1,200 | $Si_3N_4$, $Si_2ON_2$, SiC | 62 | 50 | 0.9 |
| " 2 | 1.5 | 0.6 | 2,000 | $Si_3N_4$, SiC | 72 | 75 | 4.5 |
| " 3 | 0.5 | 5 | 1,500 | $Si_3N_4$, $Si_2ON_2$ | 40 | 65 | 0.9 |
| " 4 | 2.2 | 5 | 1,500 | $Si_3N_4$, SiC | 58 | 40 | 1.0 |

Table 2

| Oxidation temperature (°C) | Before oxidation | | After oxidation | |
|---|---|---|---|---|
| | C (wt%) | O (wt%) | C (wt%) | O (wt%) |
| 500 | 0.14 | 0.9 | 0.09 | 1.0 |
| 700 | 0.14 | 0.9 | 0.08 | 1.2 |
| 900 | 0.14 | 0.9 | 0.08 | 2.2 |

Examples 15—33 (Comparative), Comparative Examples 5 and 6

SiO powder having a mean particle size of 0.2 μm was uniformly mixed with carbon black and $Si_3N_4$ powder having a ratio of α-formation of 90% at a mixing ratio as shown in the following Table 3. The resulting powdery mixture was lightly filled in a crucible and then fired at 1,200—2,000°C in $N_2$ atmosphere having $N_2$ partial pressure of 0.5—10 atmospheric pressures for 2 hours. The crystal phase, yield of $Si_3N_4$, ratio of α-formation and particles size of $Si_3N_4$ in the resulting product were measured in the same manner as in Example 1 to obtain results as shown in Table 3.

Then, the product of Example 16 was oxidized by heating in air at 500—1,000°C for 2 hours. The C and O contents before and after the oxidation are shown in the following Table 4.

Table 3(a)

| No. | Mixing ratio of starting powders | | $N_2$ partial pressure (atm) | Temperature (°C) | Crystal phase in product | Yield of $Si_3N_4$ (%) | Ratio of α-formation (%) | Particle size (μm) |
|---|---|---|---|---|---|---|---|---|
| | C/SiO *1 | $Si_3N_4$ *2 | | | | | | |
| Example 15 | 1.5 | 15 | 5 | 1,400 | $Si_3N_4$ | 97 | 90 | 0.9 |
| " 16 | 1.5 | 15 | 5 | 1,600 | $Si_3N_4$ | 98 | 87 | 1.5 |
| " 17 | 1.5 | 15 | 5 | 1,800 | $Si_3N_4$ | 97 | 85 | 2.3 |
| " 18 | 0.7 | 15 | 3 | 1,500 | $Si_3N_4$, $Si_2ON_2$ | 95 | 90 | 0.9 |
| " 19 | 1.0 | 15 | 6 | 1,500 | $Si_3N_4$, $Si_2ON_2$ | 98 | 88 | 0.8 |
| " 20 | 1.3 | 15 | 5 | 1,500 | $Si_3N_4$ | 97 | 88 | 1.0 |
| " 21 | 1.8 | 15 | 5 | 1,500 | $Si_3N_4$ | 97 | 85 | 1.0 |
| " 22 | 2.0 | 15 | 7 | 1,500 | $Si_3N_4$, SiC | 96 | 85 | 1.0 |
| " 23 | 1.5 | 15 | 2 | 1,600 | $Si_3N_4$ | 96 | 88 | 1.3 |
| " 24 | 1.5 | 15 | 5 | 1,600 | $Si_3N_4$ | 98 | 89 | 1.3 |
| " 25 | 1.5 | 15 | 10 | 1,600 | $Si_3N_4$ | 99 | 88 | 1.3 |
| " 26 | 1.5 | 0.1 | 5 | 1,600 | $Si_3N_4$ | 95 | 88 | 1.3 |
| " 27 | 1.5 | 1 | 5 | 1,600 | $Si_3N_4$ | 96 | 90 | 1.3 |

Table 3(b)

| No. | Mixing ratio of starting powders | | $N_2$ partial pressure (atm) | Temperature (°C) | Crystal phase in product | Yield of $Si_3N_4$ (%) | Ratio of α-formation (%) | Particle size (μm) |
|---|---|---|---|---|---|---|---|---|
| | C/SiO *1 | $Si_3N_4$ *2 | | | | | | |
| Example 28 | 1.5 | 20 | 5 | 1,600 | $Si_3N_4$ | 99 | 95 | 1.2 |
| " 29 *3 | 1.5 | 15 | 5 | 1,600 | $Si_3N_4$ | 96 | 84 | 0.9 |
| " 30 *4 | 1.5 | 15 | 5 | 1,600 | $Si_4N_4$ | 95 | 88 | 1.0 |
| " 31 | 0.5 | 15 | 3 | 1,500 | $Si_3N_4$, $Si_2ON_2$ | 84 | 65 | 0.9 |
| " 32 | 2.0 | 15 | 5 | 1,500 | $Si_3N_4$, SiC | 83 | 40 | 1.0 |
| " 33 | 1.5 | 15 | 7 | 1,500 | $Si_3N_4$, SiC | 90 | 82 | 1.0 |
| Comparative Example 5 | 1.5 | 15 | 0.3 | 1,200 | $Si_3N_4$, $Si_2ON_2$, SiC, $SiO_2$ | 50 | 50 | 0.9 |
| " 6 | 1.5 | 15 | 0.6 | 2,000 | $Si_3N_4$, SiC | 65 | 75 | 4.5 |

*1 : C/SiO ... molar ratio of C/SiO in powdery mixture

*2 : $Si_3N_4$ ... parts by weight based on 100 parts by weight of SiO+C mixture

*3 : atmosphere gas $N_2$ + $H_2$ (70% + 30%)

*4 : atmosphere gas $N_2$ + Ar (70% + 30%)

Table 4

| Oxidation temperature (°C) | Before oxidation | | After oxidation | |
|---|---|---|---|---|
| | C (wt%) | O (wt%) | C (wt%) | O (wt%) |
| 500 | 0.15 | 0.9 | 0.09 | 1.0 |
| 700 | 0.15 | 0.9 | 0.08 | 1.2 |
| 1,000 | 0.15 | 0.9 | 0.08 | 2.3 |

Examples 34—46 (Comparative), Comparative Examples 7—11

SiO powder having a mean particle size of 0.2 μm was uniformly mixed with carbon black and Si powder having a given particle size at a mixing ratio as shown in the following Table 5. The resulting powdery mixture was lightly filled in a crucible and then fired under conditions shown in Table 5 for 2 hours. The crystal phase, yield of $Si_3N_4$, ratio of α-formation and particle size of $Si_3N_4$ in the resulting product were measured in the same manner as in Example 1 to obtain results shown in Table 5.

Then, the product of Example 35 was oxidized by heating in air at 500—900°C for 2 hours. The C and O contents before and after the oxidation are shown in the following Table 6.

In Comparative Example 11, Si powder having a mean particle size of 2 μm was used as a starting powder, so that about 20% of coarse $Si_3N_4$ having a particle size of more than 2 μm was observed to be existent in the resulting $Si_3N_4$ product having a mean particle size of 1.1 μm.

Table 5(a)

| No. | Mixing ratio of starting powders | | Average particle size of Si powder (μm) | $N_2$ partial pressure (atm) | Temperature (°C) | Crystal phase in product | Yield of $Si_3N_4$ (%) | Ratio of α-formation (%) | Particle size (μm) |
|---|---|---|---|---|---|---|---|---|---|
| | *1 C/SiO | *2 Si | | | | | | | |
| Example 34 | 0.8 | 10 | 0.6 | 5 | 1,500 | α, β-$Si_3N_4$>>$Si_2ON_2$ | 94 | 92 | 0.9 |
| " 35 | 1.0 | 10 | 0.6 | 5 | 1,500 | α, β-$Si_3N_4$ | 98 | 95 | 0.9 |
| " 36 | 1.2 | 10 | 0.6 | 2 | 1,500 | " | 98 | 95 | 0.9 |
| " 37 | 1.4 | 10 | 0.6 | 4 | 1,500 | " | 98 | 94 | 0.9 |
| " 38 | 1.6 | 10 | 0.6 | 6 | 1,500 | " | 97 | 93 | 0.9 |
| " 39 | 1.4 | 1 | 0.6 | 5 | 1,500 | " | 99 | 95 | 0.9 |
| " 40 | 1.4 | 5 | 0.6 | 5 | 1,500 | " | 97 | 92 | 0.9 |
| " 41 | 1.4 | 8 | 0.8 | 2 | 1,500 | " | 99 | 93 | 0.9 |
| " 42 | 1.4 | 0.1 | 1.0 | 3 | 1,500 | " | 97 | 94 | 0.9 |
| " 43 | 1.4 | 0.5 | 0.6 | 5 | 1,500 | " | 98 | 93 | 0.9 |
| " 44 | 1.4 | 10 | 0.6 | 6 | 1,400 | " | 99 | 95 | 0.9 |
| " 45 | 1.4 | 10 | 0.6 | 9 | 1,700 | " | 98 | 92 | 1.0 |
| " 46 | 1.4 | 10 | 0.6 | 3 | 1,500 | " | 98 | 94 | 0.9 |

Table 5(b)

| No. | Mixing ratio of starting powders | | Average particle size of Si powder (μm) | $N_2$ partial pressure (atm) | Temperature (°C) | Crystal phase in product | Yield of $Si_3N_4$ (%) | Ratio of α-formation (%) | Particle size (μm) |
|---|---|---|---|---|---|---|---|---|---|
| | *1 C/SiO | *2 Si | | | | | | | |
| Comparative Example 7 | 1.4 | 10 | 0.6 | 0.8 | 1,500 | α, β-$Si_3N_4$, SiC | 65 | 32 | 1.0 |
| " 8 | 1.4 | 10 | 0.6 | 1.0 | 1,500 | " | 83 | 55 | 1.3 |
| " 9 | 1.4 | 10 | 0.6 | 5 | 1,200 | α, β-$Si_3N_4$, $Si_2ON_2$ | 53 | 32 | 1.1 |
| " 10 | 1.4 | 10 | 0.6 | 5 | 2,000 | α, β-$Si_3N_4$, SiC | 70 | 40 | 2.3 |
| " 11 | 1.4 | 10 | 2.0 | 5 | 1,500 | α, β-$Si_3N_4$ | 93 | 85 | 1.4 |

*1 : molar ratio of C/SiO in powdery mixture

*2 : parts by weight based on 100 parts by weight of C+SiO mixture

Table 6

| Oxidation temperature (°C) | Before oxidation | | After oxidation | |
|---|---|---|---|---|
| | C (wt%) | O (wt%) | C (wt%) | O (wt%) |
| 500 | 0.14 | 0.9 | 0.09 | 1.0 |
| 700 | 0.14 | 0.9 | 0.08 | 1.2 |
| 900 | 0.14 | 0.9 | 0.08 | 2.2 |

Examples 47—61 (Comparative), Comparative Examples 12—17

A powdery mixture was prepared by uniformly mixing SiO powder having a mean particle size of 0.2 μm with carbon black, Si powder and $Si_3N_4$ powder having a ratio of α-formation of 90% at a mixing ratio as shown in the following Table 7. This mixture was lightly filled in a crucible and then fired under conditions shown in Table 7 for 2 hours. Thereafter, the crystal phase, yield of $Si_3N_4$, ratio of α-formation and particle size of $Si_3N_4$ in the resulting product were measured in the same manner as in Example 1 to obtain results as shown in Table 7.

Table 7(a)

| No. | Mixing ratio of starting powders | | | Average particle size of Si powder (μm) | Temper-ature (°C) | $N_2$ partial pressure (atm) | Crystal phase in product | Yield of $Si_3N_4$ (%) | Ratio of α-formation (%) | Particle size (μm) |
|---|---|---|---|---|---|---|---|---|---|---|
| | *1 C/SiO | *2 Si | *3 $Si_3N_4$ | | | | | | | |
| Example 47 | 0.8 | 10 | 10 | 0.6 | 1,500 | 2 | α, β-$Si_3N_4$>>$Si_2ON_2$ | 93 | 91 | 0.9 |
| " 48 | 1.0 | 10 | 10 | 0.6 | 1,500 | 2 | α, β-$Si_3N_4$ | 97 | 93 | 0.8 |
| " 49 | 1.2 | 10 | 15 | 0.6 | 1,500 | 2 | " | 98 | 94 | 0.9 |
| " 50 | 1.4 | 10 | 10 | 0.6 | 1,500 | 2 | " | 98 | 93 | 0.9 |
| " 51 | 1.6 | 10 | 10 | 0.6 | 1,500 | 3 | " | 97 | 93 | 0.9 |
| " 52 | 1.4 | 1 | 10 | 0.6 | 1,500 | 3 | " | 94 | 91 | 0.9 |
| " 53 | 1.4 | 5 | 0.5 | 0.6 | 1,500 | 3 | " | 96 | 92 | 0.9 |
| " 54 | 1.4 | 10 | 1 | 0.6 | 1,500 | 4 | " | 90 | 85 | 0.9 |
| " 55 | 1.4 | 10 | 5 | 0.6 | 1,500 | 4 | " | 95 | 92 | 0.9 |
| " 56 | 1.4 | 10 | 10 | 0.8 | 1,500 | 4 | " | 98 | 94 | 1.0 |
| " 57 | 1.4 | 10 | 0.1 | 1.0 | 1,500 | 6 | " | 97 | 94 | 1.2 |
| " 58 | 1.4 | 10 | 10 | 0.6 | 1,400 | 6 | " | 99 | 96 | 0.9 |
| " 59 | 1.4 | 10 | 10 | 0.6 | 1,700 | 6 | " | 97 | 90 | 0.9 |
| " 60 | 1.4 | 10 | 10 | 0.6 | 1,500 | 5 | " | 99 | 94 | 0.8 |
| " 61 | 1.4 | 10 | 10 | 0.6 | 1,500 | 10 | " | 99 | 92 | 0.8 |

Table 7(b)

| No. | Mixing ratio of starting powders | | | Average particle size of Si powder (µm) | Temperature (°C) | $N_2$ partial pressure (atm) | Crystal phase in product | Yield of $Si_3N_4$ (%) | Ratio of α-formation (%) | Particle size (µm) |
|---|---|---|---|---|---|---|---|---|---|---|
| | *1 C/SiO | *2 Si | *3 $Si_3N_4$ | | | | | | | |
| Comparative Example 12 | 1.4 | 10 | 0 | 0.6 | 1,500 | 1 | α, β-$Si_3N_4$>>SiC | 82 | 50 | 1.0 |
| " 13 | 1.4 | 10 | 10 | 2.0 | 1,500 | 3 | α, β-$Si_3N_4$ | 93 | 85 | *4 1.4 |
| " 14 | 1.4 | 10 | 10 | 0.6 | 1,200 | 2 | α, β-$Si_3N_4$>>$Si_2ON_2$ | 55 | 36 | 0.8 |
| " 15 | 1.4 | 10 | 10 | 0.6 | 2,000 | 2 | α, β-$Si_3N_4$>>SiC | 75 | 42 | 2.4 |
| " 16 | 0.6 | 10 | 10 | 0.6 | 1,500 | 4 | α, β-$Si_3N_4$>$Si_2ON_2$, $SiO_2$ | 70 | 60 | 1.0 |
| " 17 | 2.2 | 10 | 10 | 0.6 | 1,500 | 2 | α, β-$Si_3N_4$>β-SiC | 81 | 62 | 1.2 |

*1 : molar ratio of C/SiO in powdery mixture

*2, *3 } parts by weight based on 100 parts by weight of C+SiO mixture

*4 : About 20% of coarse $Si_3N_4$ having a particle size of more than 2 µm was existent in the product powder.

Examples 62—79, Comparative Examples 18—22

A powdery mixture was prepared by uniformly mixing SiO powder with a mean particle size of 0.2 µm with carbon black and, if necessary, Si powder and/or $Si_3N_4$ powder having a ratio of α-formation of 90% at a mixing ratio as shown in the following Table 8, which was then shaped into a molded body of 30 mm in diameter and 30 mm in length having a bulk density shown in Table 8 by means of an extrusion molding machine using a 5% PVA solution as an organic binder. The resulting molded body was fired in a pressurized Tammann furnace under conditions shown in Table 8 for 2 hours. Thereafter, the crystal phase, yield of $Si_3N_4$ and particle size of $Si_3N_4$ in the resulting product were measured in the same manner as in Example 1 to obtain results as shown in Table 8.

Table 8(a)

| No. | Starting powders | | | Bulk density ($g/cm^3$) | Temperature (°C) | $N_2$ partial pressure (atm) | Crystal phase in product | Particle size (μm) | Yield of $Si_3N_4$ (%) |
|---|---|---|---|---|---|---|---|---|---|
| | C/SiO molar ratio | $Si_3N_4$ (wt%) | Si (wt%) | | | | | | |
| Example 62 | 1.5 | - | - | 0.3 | 1,600 | 2 | $Si_3N_4$ | 0.5 | 96 |
| " 63 | 1.5 | - | - | 0.5 | 1,600 | 2 | " | 0.6 | 96 |
| " 64 | 1.5 | - | - | 0.7 | 1,600 | 3 | " | 0.7 | 96 |
| " 65 | 1.5 | - | - | 0.85 | 1,600 | 3 | " | 0.7 | 95 |
| " 66 | 0.7 | - | - | 0.5 | 1,600 | 3 | " | 0.6 | 94 |
| " 67 | 2.0 | 0.1 | - | 0.5 | 1,600 | 5 | " | 0.6 | 98 |
| " 68 | 1.5 | 0.5 | - | 0.4 | 1,400 | 5 | " | 0.6 | 98 |
| " 69 | 1.2 | 5 | - | 0.6 | 1,800 | 5 | " | 0.6 | 98 |
| " 70 | 1.7 | - | - | 0.5 | 1,500 | 2 | " | 0.6 | 96 |
| " 71 | 1.0 | - | - | 0.5 | 1,500 | 10 | " | 0.6 | 97 |
| " 72 | 1.5 | 1 | - | 0.5 | 1,500 | 5 | " | 0.6 | 98 |
| " 73 | 1.7 | 5 | - | 0.3 | 1,700 | 5 | " | 0.5 | 99 |
| " 74 | 1.2 | 10 | - | 0.6 | 1,600 | 3 | " | 0.6 | 99 |
| " 75 | 1.5 | - | 1 | 0.7 | 1,500 | 5 | " | 0.7 | 98 |

Table 8(b)

| No. | Starting powders | | | Bulk density ($g/cm^3$) | Temperature (°C) | $N_2$ partial pressure (atm) | Crystal phase in product | Particle size (μm) | Yield of $Si_3N_4$ (%) |
|---|---|---|---|---|---|---|---|---|---|
| | C/SiO molar ratio | $Si_3N_4$ (wt%) | Si (wt%) | | | | | | |
| Example 76 | 1.2 | - | 5 | 0.5 | 1,400 | 3 | $Si_3N_4$ | 0.5 | 99 |
| " 77 | 1.7 | - | 10 | 0.3 | 1,700 | 5 | " | 0.5 | 99 |
| " 78 | 1.5 | 5 | 10 | 0.4 | 1,800 | 10 | " | 0.6 | 99 |
| " 79 | 1.5 | 10 | 5 | 0.6 | 1,500 | 5 | " | 0.5 | 99 |
| Comparative Example 18 | 1.5 | - | - | 0.9 | 1,600 | 5 | $Si_3N_4$, $Si_2ON_2$ | 1.0 | 65 |
| " 19 | 1.5 | - | - | 1.2 | 1,600 | 5 | " | 1.1 | 60 |
| " 20 | 1.5 | 10 | - | 0.9 | 1,600 | 5 | " | 1.0 | 67 |
| " 21 | 1.5 | - | 10 | 1.0 | 1,600 | 5 | " | 1.0 | 67 |
| " 22 | 1.5 | 10 | 10 | 0.9 | 1,600 | 5 | " | 1.0 | 70 |

As mentioned above, according to the invention, high purity silicon nitride fine powders having a high α-formation ratio can be produced cheaply and efficiently. Furthermore, when the powdery mixture is shaped into the molded body, the particle size is made as fine as about 0.6 μm and the handling and the reaction control become easy, so that it is possible to perform mass production of $Si_3N_4$ powder.

**Claims**

1. A method of producing silicon nitride powder, which comprises firing a mixture of SiO powder and a carbonaceous material at a temperature of 1400 to 1800°C in a nitriding atmosphere having a partial nitrogen pressure of not less than 2 atmospheric pressures, said mixture having a molar ratio of C/SiO of 0.7—2.0 and being shaped into a moulded body having a bulk density of not more than 0.85 g/cm$^3$.

2. The method according to claim 1, wherein said mixture further contains $Si_3N_4$ powder and/or Si powder.

**Patentansprüche**

1. Verfahren zur Herstellung eines Siliciumnitrid-Pulvers, umfassend das Brennen einer Mischung aus SiO-Pulver und einem kohlenstoffhaltigen Material bei einer Temperatur von 1400°C bis 1800°C in einer nitridierenden Atmosphäre mit einem Stickstoff-Partialdruck von nicht weniger als dem zweifachen Atmosphären-Druck, wobei die Mischung ein Stoffmengen-Verhältnis ("Molverhältnis") C/SiO von 0,7 bis 2,0 hat und zu einem Formkörper mit einer Raummasse von nicht mehr als 0,85 g/cm$^3$ geformt wird.

2. Verfahren nach Anspruch 1, worin die Mischung weiterhin $Si_3N_4$-Pulver und/oder Si-Pulver enthält.

**Revendications**

1. Procédé pour la préparation de poudre de nitrure de silicium qui comprend la cuisson d'un mélange de SiO en poudre et d'un matériau carboné à une température de 1400 à 1800°C sous une atmosphère favorisant la nitruration et ayant une pression partielle d'azote d'au moins 2 atmosphères, ledit mélange ayant un rapport molaire C/SiO de 0,7 à 2,0 et étant formé en un corps moulé ayant une densité d'au moins 0,85 g/cm$^3$.

2. Procédé selon la revendication 1, dans lequel ledit mélange comprend également du $Si_3N_4$ en poudre et/ou du Si en poudre.

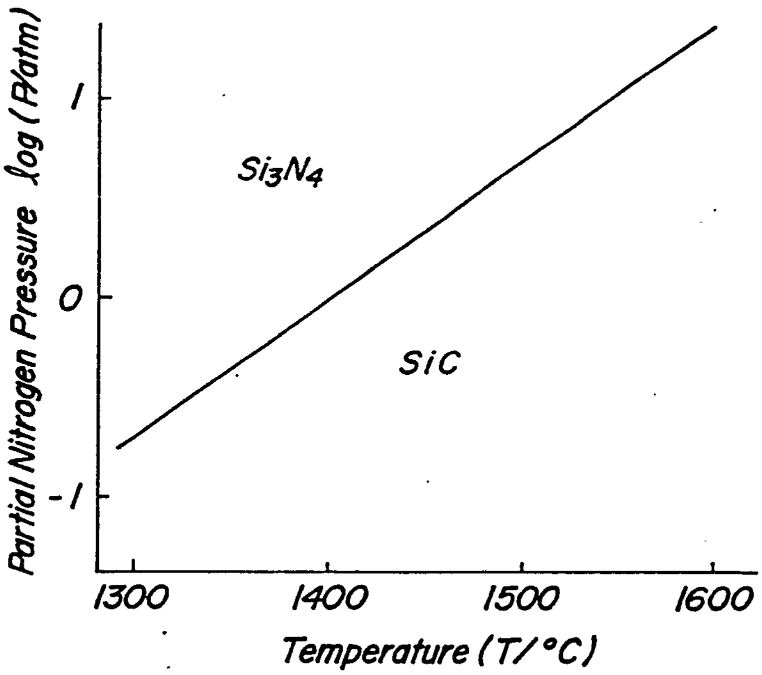
Partial Nitrogen Pressure log (P/atm)
1
0
-1
$Si_3N_4$
SiC
1300
1400
1500
1600
Temperature (T/°C)